# EUROPÄISCHE PATENTANMELDUNG

(11) **EP 3 550 577 A1**
(43) Veröffentlichungstag der Anmeldung: **09.10.2019**
(21) Anmeldenummer: 18165593.7
(22) Anmeldetag: 04.04.2018
(51) Int. Cl.: H01F 1/42, H01F 3/00, H01F 27/24, H01F 30/00, H01F 37/00

(54) **SPULE, FILTER, ANTRIEBSYSTEM UND VERFAHREN ZUR VERMINDERUNG VON LAGERSTRÖMEN BEI EINER ELEKTRISCHEN MASCHINE**

(71) Anmelder: Siemens Aktiengesellschaft, 80333 München (DE)
(72) Erfinder: Schwarz, Hermann, 97084 Würzburg (DE)

(57) **Zusammenfassung**

Die Erfindung betrifft einen Filter (33) mit einer solchen Spule (3), ein Antriebsystem mit einem solchen Filter (33) sowie ein Verfahren zur Verminderung von Lagerströmen bei einer elektrischen Maschine (35). Der Spulenkern (1) der Spule (3) umfasst als Werkstoff nanokristalline Cellulose, insbesondere in Verbundwerkstoff eingebettet. Durch die gute elektrische Leitfähigkeit der Partikel der nanokristallinen Cellulose ist die Permeabilität eines Spulenkerns (1) etwa so hoch wie bei einem herkömmlich verwendeten Ferrit. Nanokristalline Zellulose oder ein Verbundwerkstoff aus Kunststoff oder ein Harz mit nanokristalliner Cellulose ist jedoch erheblich leichter bearbeitbar und weist ein geringes spezifisches Gewicht auf.

## Beschreibung

Die Erfindung betrifft eine Spule, einen Filter mit einer solchen Spule, ein Antriebsystem mit einem solchen Filter sowie ein Verfahren zur Verminderung von Lagerströmen bei einer elektrischen Maschine.

Lagerströme treten bei unzureichender Erdung von elektrischen Maschinen auf. Lagerströme entstehen insbesondere durch hochfrequente Strom-Anteile. Die hochfrequenten Strom-Anteile werden durch (Frequenz-) Umrichter mit hoher Taktfrequenz verursacht. Zur Vermeidung von Lagerströmen dienen insbesondere Filter, wobei die Filter eine Spule aufweisen. Die Filter werden in der Regel in den jeweiligen elektrischen Leiter zwischen einen Frequenzumrichter und der elektrischen Maschine positioniert. Die Spule dient beispielhaft zur galvanischen Trennung der jeweiligen Stromphase, als Tiefpassfilter und/oder zum Ausgleich von kapazitiven Blindwiderständen.

Spulen weisen in der Regel einen Spulenkern auf, wobei der Spulenkern meist aus Ferrit besteht. Der Spulenkern erhöht in der Regel die Induktivität der Spule.

Nachteilhaft ist, dass Ferrit schwer und aufwendig in der Herstellung und der Bearbeitung ist.

Daher ist die Aufgabe der Erfindung, Spulen mit einem geringen Gewicht einfach bereitzustellen.

Insbesondere ist es Aufgabe der Erfindung, Lagerströme in einer elektrischen Maschine auf besonders einfache Art zu vermeiden.

Die Aufgabe wird durch eine Spule gemäß Anspruch 1, durch einen Filter, insbesondere durch einen Tiefpassfilter, nach Anspruch 4 gelöst. Weiter wird die Aufgabe durch ein Antriebsystem mit einer solchen Spule oder einem solchen Filter gelöst. Schließlich wird die Aufgabe durch ein Verfahren nach Anspruch 7 gelöst.

Vorteilhaft dient zur Vermeidung von Lagerströmen, insbesondere in elektrischen Maschinen, der Einsatz von nanokristalliner Zellulose.

Nanokristalline Zellulose weist zumindest auf mikroskopischem Level eine gute elektrische Leitfähigkeit auf. Als nanokristalline Cellulose, insbesondere in Form eines Verbundwerkstoffes, ist die makroskopische Leitfähigkeit aufgrund der Korngrenzen stark reduziert.

Lagerströme entstehen durch hochfrequente Störströme. Die hochfrequenten Störströme werden von modernen (Frequenz-) Umrichter erzeugt, da moderne Frequenzumrichter eine hohe Taktfrequenz aufweisen. Die hochfrequenten Störströme werden in der Regel durch Tiefpass-Filter, die zwischen dem (Frequenz-) Umrichter und der elektrischen Maschine schalttechnisch eingefügt sind, herausgefiltert. Ein solcher Tiefpass-Filter weist in der Regel eine Spule auf.

Eine Spule weist zur Erhöhung ihrer Induktivität einen Spulenkern auf. Der Spulenkern ist meist aus Ferrit oder aus einem Blechpaket gefertigt. Ein solcher Spulenkern weist in der Regel ein hohes Gewicht auf. Zudem ist ein solcher Spulenkern schwierig in der Bearbeitung.

Deshalb schlägt die Erfindung vor, den Spulenkern zumindest zum Teil aus nanokristalliner Cellulose zu fertigen. Insbesondere ein Verbundmaterial, aufweisend nanokristalline Cellulose, ist einfach in der Bearbeitung und weist ein niedriges spezifisches Gewicht auf. Weiter ist nanokristalline Cellulose in der Erzeugung nicht so energieaufwendig wie Ferrit oder ein Blechpaket.

(PA1) Die Spule weist einen Spulenkern auf, wobei der Spulenkern nanokristalline Cellulose umfasst.

Deshalb weist die Spule zumindest eine Wicklung und einen Spulenkern auf. Vorteilhaft ist eine Mehrzahl der Wicklung durch einen gemeinsamen Spulenkern gekoppelt.

Insbesondere durch eine Mischung der nanokristallinen Cellulose und einem Kunststoff oder nanokristalline Cellulose in einem Verbundwerkstoff wird ein Werkstoff bereitgestellt, der für einen Spulenkern gut geeignet ist.

Durch die Härte bei gleichzeitig geringem Gewicht im Vergleich zu Ferrit ergeben sich neue Anwendungsbereiche einer Spule.

(PA2) In einer vorteilhaften Ausgestaltung weist die Spule einen, mit zumindest einer weiteren Spule gekoppelten, Spulenkern auf.

Bei einer Mehrzahl von Phasen, einem Mehrphasen-Wechselstrom, wird für die jeweilige Phase eine Spule oder eine Wicklung bereitgestellt. Die Phase durchläuft hierbei die Spule. Die Spule weist vorteilhaft einen gemeinsamen Spulenkern auf, wobei der Spulenkern nanokristalline Cellulose umfasst.

Vorzugsweise weist eine Spule eine oder mehrere Wicklungen auf. Eine Mehrzahl von Spulen wird vorzugsweise durch einen gemeinsamen Spulenkern miteinander gekoppelt. Durch die Kopplung der Spulen über einen gemeinsamen Kern können induktive Effekte ausgeglichen werden und/oder Material des Spulenkerns eingespart werden. Vorzugsweise ist der Spulenkern in einer geschlossenen Form ausgebildet. Weiterhin ist der Spulenkern derart ausgeführt, dass magnetische Feldlinien der Spule vollständig im Spulenkern verlaufen können.

**(PA3)** In einer vorteilhaften Ausgestaltung der Erfindung weist der Spulenkern einen Verbundwerkstoff auf, wobei der Verbundwerkstoff einen Kunststoff und nanokristalline Cellulose umfasst.

Insbesondere für eine verbesserte Bearbeitbarkeit kann die nanokristalline Cellulose in Kunststoff eingebettet sein. Hierbei kann die nanokristalline Zellulose in gepresster Form von einer Kunststoff-Hülle ummantelt sein. Zusätzlich oder alternativ können der Kunststoff und/oder ein Harz und die nanokristalline Cellulose ein Verbundmaterial ausbilden. So kann eine gute Bearbeitbarkeit des Spulenkerns gewährleistet werden.

(PA4) Ein wichtiger Einsatz oder Ausgestaltung der Erfindung ist ein Filter, insbesondere ein Tiefpassfilter, aufweisend eine Spule mit einem Kern, der nanokristalline Cellulose aufweist.

Vorzugsweise werden mit Hilfe eines solchen Filters hochfrequente Spannungen bzw. hochfrequente Ströme vermindert. Mit einem solchen Filter können insbesondere Störsignale vermindert werden, die zu Kriechströmen in einem Antriebsystem führen können. Mit einer Spule, deren Kern nanokristalline Cellulose aufweist, sind Filter besonders günstig herstellbar. Zudem sind gerade im mobilen Einsatzbereich Gewichtseinsparungen möglich.

(PA5) Bei einer weiteren vorteilhaften Ausgestaltung der Erfindung ist der Filter zur Verminderung von hochfrequenten Strömen einer Stromquelle vorgesehen.

Die hochfrequenten Ströme werden insbesondere in (Frequenz-) Umrichter mit hoher Taktfrequenz erzeugt. Durch den induktiven Widerstand der Spule lassen sich die hochfrequenten Ströme gut herausfiltern.

Für einen Filter einer höheren Ordnung ist die Spule zusätzlich mit einem Kondensator kombinierbar.

Hochfrequente Ströme in Antriebsystemen führen oft zu einer Schädigung von Gleitlagern. Die Schädigung wird durch sogenannte Lagerströme hervorgerufen. Die Lagerströme werden durch hochfrequente Störströme hervorgerufen. Durch die Filterung der hochfrequenten Störströme mit einem hier beschriebenen Filter ist eine wirksame Reduktion der Lagerströme möglich.

Insbesondere in Kombination mit einer Erdung der Elemente des Antriebsystems lassen sich Lagerströme wirksam vermindern.

Durch die hier beschriebene Spule wird ein solches Antriebsystem auch für gewichtskritische Einsatzgebiete vorteilhaft.

(PA6) Das Antriebsystem umfasst eine Stromquelle, insbesondere einen (Frequenz-) Umrichter, eine elektrische Maschine sowie einen Filter, wobei der Filter eine Spule mit einem Kern aufweist, der nanokristalline Cellulose aufweist.

Das Antriebsystem dient insbesondere zum Antrieb eines Elements einer Papiermaschine oder einer anderen Produktionsmaschine. In der Regel versorgt die Stromquelle die elektrische Maschine mit einem Antriebstrom. Der Antriebsstrom umfasst vorzugsweise drei Phasen. Der Filter dient zum Herausfiltern von hochfrequenten Störströmen aus dem Antriebsstrom. Der Filter weist zumindest eine Spule auf, dessen Kern nanokristalline Cellulose umfasst. Durch den Filter werden die Lagerströme reduziert, die ansonsten ein Gleitlager der elektrischen Maschine schädigen könnten.

Aufgrund des verminderten Gewichtes der hier beschriebenen Spule, insbesondere des Spulenkerns, ist ein solches Antriebsystem vorteilhaft bei einem elektrisch betriebenen Fahrzeug, einem elektrisch betriebenen Luftfahrzeug oder einem Schienenfahrzeug einsetzbar.

Durch die Verwendung von nanokristalliner Cellulose kann vorzugsweise ein Antriebsystem mit einem besonders niedrigen Gewicht realisiert werden.

**(PA7)** Bei dem Verfahren zur Verminderung von Lagerströmen bei einer elektrischen Maschine durchläuft ein Strom, der von einer Stromquelle bereitgestellt ist, eine hier beschriebene Spule, bevor der Strom einer elektrischen Maschine bereitgestellt wird.

Das Verfahren führt vorzugsweise zur Reduktion der Lagerströme in einer elektrischen Maschine. So wird die Lebensdauer der elektrischen Maschine erhöht. Die Reduktion der Lagerströme erfolgt vorzugsweise durch einen Filter, der eine Spule aufweist, wobei die Spule nanokristalline Cellulose umfasst.

(PA8) Bei einer weiteren vorteilhaften Ausgestaltung der Erfindung dient die Spule zur galvanischen Trennung des Stromes von der Stromquelle von dem Strom, welcher der elektrische Maschine bereitgestellt wird.

Mit Hilfe einer Spule, die nanokristalline Cellulose umfasst, kann auch eine galvanische Trennung von Antriebskomponenten wie einem (Frequenz-) Umrichter und einer elektrischen Maschine erfolgen. Durch die galvanische Trennung können hochfrequente Ströme besonders wirksam aus einem Antriebsstrom herausgefiltert werden. Eine galvanische Trennung erfolgt über zumindest zwei Spulen, die einen gemeinsamen Spulenkern aufweisen. Vorzugsweise ist der Spulenkern im Wesentlichen ringförmig ausgeführt.

Der Einsatz der Erfindung ist insbesondere bei Antrieben für industrielle Anlagen wie einer Papiermaschine vorteilhaft.

Im Folgenden wird die Erfindung anhand von Figuren näher beschrieben und erläutert. Bei den in den Figuren gezeigten Ausführungen handelt es sich lediglich um beispielhafte Ausführungsformen der Erfindung. Einzelne Merkmale können zu neuen Ausführungen der Erfindung kombiniert werden.

Es zeigen:
- FIG 1: einen Filter,
- FIG 2: einen Filter zur galvanischen Trennung
- FIG 3: ein Antriebsystem

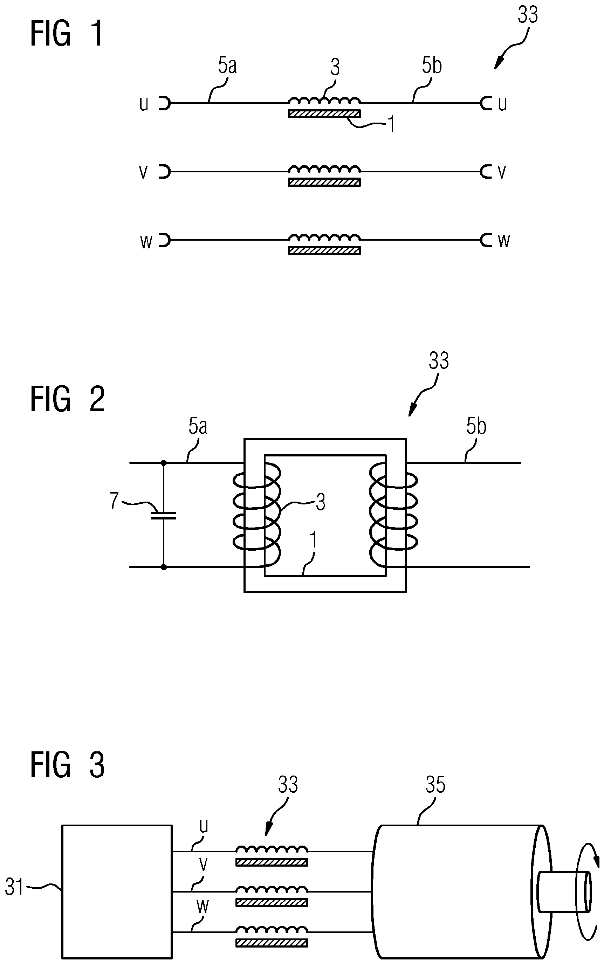

**FIG 1** zeigt einen Filter 33, wobei der Filter 33 zur Filterung von drei Phasen u, v, w dient. Die Phasen u, v, w sind die Stromphasen bei einer Dreiphasen-Wechselspannung. Die jeweilige Phase u, v, w wird durch eine Spule 3 geleitet. Die Spule 3 weist jeweils einen Spulenkern 1 auf, wobei der Spulenkern 1 nanokristalline Cellulose umfasst. Die jeweilige Phase u, v, w wird durch eine elektrische Leitung 5a zur Spule 3 geleitet und durch eine weitere elektrische Leitung 5b von der Spule zur dem weiteren Bauelement, insbesondere einer elektrischen Maschine, (nicht gezeigt) geleitet. Die Spulenkerne 1 können isoliert jeweils eine Spule 3 aufnehmen. Die Spulenkerne 1 für die einzelnen Phasen u, v, w können auch durch einen gemeinsamen Spulenkern gekoppelt sein.

**FIG 2** zeigt einen Filter 33 zur galvanischen Trennung einer Phase u, v, w. Der Filter 33 umfasst zwei Spulen 3, wobei die Spulen 3 durch den Spulenkern 1 gekoppelt sind. Durch die Kopplung der Spulenkerne 1 der jeweiligen Spule 3 ist eine galvanische Trennung der elektrischen Leitungen 5a, 5b erreichbar. Zur verbesserten Filterung kann die Spule 3 parallel mit einem Kondensator 7 verbunden sein. Der optionale Kondensator 7 dient zur Verbesserung des Filters 33. So können hochfrequente Ströme verbessert aus der jeweiligen Phase u, v, w entfernt werden.

**FIG 3** zeigt ein Antriebsystem. Das Antriebsystem umfasst einen Frequenzumrichter 31. Der Frequenzumrichter 31 stellt (Strom-) Phasen u, v, w bereit. Die jeweilige Phase u, v, w wird jeweils mit Hilfe einer Spule 3 und einem Spulenkern 1, von hochfrequenten Strömen gefiltert. Die Spulen 3 in Verbindung mit den Spulenkernen 1 bilden den Filter 33. Die Phasen u, v, w werden nach Durchgang durch den Filter 33 einer elektrischen Maschine 35 bereitgestellt. Die elektrische Maschine 35 dient beispielhaft zum Antrieb einer Walze in einer Papiermaschine.

Zusammenfassend betrifft die Erfindung eine Spule 3, einen Filter 33 mit einer solchen Spule 3, ein Antriebsystem mit einem solchen Filter 33 sowie ein Verfahren zur Verminderung von Lagerströmen bei einer elektrischen Maschine 35. Der Spulenkern 1 der Spule 3 umfasst als Werkstoff nanokristalline Cellulose, insbesondere in Verbundwerkstoff eingebettet. Durch die gute elektrische Leitfähigkeit der Partikel der nanokristallinen Cellulose ist die Permeabilität eines Spulenkerns 1 etwa so hoch wie bei einem herkömmlich verwendeten Ferrit. Nanokristalline Zellulose oder ein Verbundwerkstoff aus Kunststoff oder ein Harz mit nanokristalliner Cellulose ist jedoch erheblich leichter bearbeitbar und weist ein geringes spezifisches Gewicht auf.

## Patentansprüche

1. Spule (3) mit einem Spulenkern (1), **dadurch gekennzeichnet, dass** der Spulenkern (1) nanokristalline Cellulose aufweist.

2. Spule (3) nach Anspruch 1, wobei die Spule (3) einen mit zumindest einer weiteren Spule (3) gekoppelten Spulenkern (1) aufweist.

3. Spule (3) nach einem der vorangehenden Ansprüche, wobei der Spulenkern (1) einen Verbundwerkstoff aufweist und wobei der Verbundwerkstoff einen Kunststoff und nanokristalline Cellulose umfasst.

4. Filter (33), insbesondere Tiefpassfilter, aufweisend eine Spule (3) nach einem der Ansprüche 1 bis 3.

5. Filter (33) nach Anspruch 4, wobei der Filter zur Verminderung von hochfrequenten Strömen einer Stromquelle (31) vorgesehen ist.

6. Antriebsystem, umfassend eine Stromquelle (31), insbesondere ein Umrichter, und eine elektrische Maschine (35) und einen Filter (33) nach einem der Ansprüche 4 oder 5.

7. Verfahren zur Verminderung von Lagerströmen bei einer elektrischen Maschine (35), wobei ein Strom, der von einer Stromquelle (31) bereitgestellt wird, eine Spule (3) nach einem der Ansprüche 1 bis 3 durchläuft, bevor der Strom einer elektrischen Maschine (31) bereitgestellt wird.

8. Verfahren nach Anspruch 7, wobei die Spule (3) zur galvanischen Trennung des Stromes von der Stromquelle (31) von dem Strom, welcher der elektrische Maschine (35) bereitgestellt wird, dient.
